# EUROPÄISCHE PATENTSCHRIFT

(11) **EP 3 525 622 B1**
(45) Veröffentlichungstag und Bekanntmachung des Hinweises auf die Patenterteilung: **13.05.2020**
(21) Anmeldenummer: 17745239.8
(22) Anmeldetag: 13.07.2017
(51) Int. Cl.: A47B 46/00, A47B 51/00, F16M 11/04

(54) **STELLMECHANISMUS FÜR EINEN SCHWENKBAR GELAGERTEN STELLARM**
ADJUSTING MECHANISM FOR A PIVOTING POSITIONING ARM
MÉCANISME DE RÉGLAGE POUR UN BRAS PIVOTANT

(30) Priorität: 17.10.2016 AT 509372016
(43) Veröffentlichungstag der Anmeldung: 21.08.2019
(73) Patentinhaber: Julius Blum GmbH, 6973 Höchst (AT)
(72) Erfinder: DUBACH, Fredi, 8344 Bäretwil (CH); FLOGAUS, Alexander Simon, 88097 Eriskirch (DE)
(74) Vertreter: Torggler & Hofinger Patentanwälte
(86) Internationale Anmeldenummer: PCT/AT2017/060176
(87) Internationale Veröffentlichungsnummer: WO 2018/071930

(56) Entgegenhaltungen:
- EP-A1- 1 820 420
- EP-A1- 2 003 276
- EP-A1- 2 870 895
- US-A1- 2009 289 535
- US-A1- 2014 263 122

## Beschreibung

Die vorliegende Erfindung bezieht sich auf einen Möbelantrieb für ein relativ zu einem Möbelkorpus bewegbar gelagertes Möbelteil, umfassend:
- wenigstens einen schwenkbar gelagerten Stellarm zum Bewegen des bewegbaren Möbelteiles,
- eine Kompensationsvorrichtung, welche auf den wenigstens einen Stellarm eine einer Gewichtskraft des gegebenenfalls beladenen Möbelteiles entgegengesetzte Kompensationskraft ausübt, wobei die Kompensationsvorrichtung eine Federvorrichtung zur Kraftbeaufschlagung des wenigstens einen Stellarmes aufweist,
- einen Übertragungsmechanismus zum Übertragen einer Kraft der Federvorrichtung auf den wenigstens einen Stellarm, wobei der Übertragungsmechanismus zumindest ein bewegbar gelagertes Stellglied, eine Stellkontur und ein von der Federvorrichtung belastetes Druckstück aufweist, wobei das Druckstück bei einer Bewegung des wenigstens einen Stellarmes entlang der Stellkontur verfahrbar ist.

Im Weiteren betrifft die Erfindung ein Möbel mit einem Möbelantrieb der zu beschreibenden Art.

Eine besondere Herausforderung bei Verwendung solcher Möbelantriebe besteht darin, dass das auf den Stellarm ausgeübte Drehmoment der Federvorrichtung an das jeweilige Gewicht und/oder an unterschiedliche Beladungszustände des bewegbaren Möbelteiles angepasst wird. Wenn dieses Drehmoment hinsichtlich des Gewichts und/oder hinsichtlich eines Beladungszustandes des Möbelteiles zu niedrig ist, so kann das bewegbare Möbelteil überhaupt nicht in eine angehobene Endlage relativ zu einem Möbelkorpus bewegt werden. Ist hingegen das auf den Stellarm wirkende Drehmoment zu hoch eingestellt, so ist es durchaus möglich, dass das bewegbare Möbelteil mit unangemessen hoher Kraft in die angehobene Endlage relativ zu einem Möbelkorpus hochschnellt.

In der WO 2010/006346 A2 ist ein Möbelantrieb für ein gegenüber einem Möbelkorpus absenkbares Möbelteil offenbart, wobei der Möbelantrieb einen ersten Elektromotor zum Antreiben des Möbelteiles, eine Messeinrichtung zur Erfassung eines Gewichtes des Möbelteiles sowie eine Kompensationsvorrichtung mit Federn aufweist, welche durch einen zweiten Elektromotor in Abhängigkeit des gemessenen Gewichtes des bewegbaren Möbelteiles unterschiedlich vorgespannt werden können. Die Herstellung eines solchen Möbelantriebes mit elektrischen Komponenten ist allerdings auch mit höheren Kosten verbunden.

Die US 2011/0266937 A1 zeigt einen selbsteinstellenden Kraftantrieb zum Bewegen eines bewegbaren Möbelteiles, wobei ein Stellarm je nach Gewicht des bewegbaren Möbelteiles unterschiedlich verschwenkt wird und dadurch einen Energiespeicher zur Kompensation des Gewichtes des bewegbaren Möbelteiles unterschiedlich vorspannt. Nach erfolgter Einstellung des Stellarmes kann dessen voreingestellte Lage durch einen Riegel fixiert werden, wobei der Riegel durch einen Seilzug mit einem daran angeordneten Griff zu betätigen ist.

Die EP 1 820 420 A1 zeigt ein Möbel mit einem absenkbaren Möbelteil, wobei eine Kompensationsvorrichtung mit einer Gasdruckfeder zur Kompensation des Gewichtes des bewegbaren Möbelteiles vorgesehen ist. Die Gasdruckfeder ist mit einem verfahrbaren Schlitten gelenkig verbunden, wobei der Schlitten durch Betätigung eines Hebels mit einem daran angeordneten Griff entlang einer Führung relativ zu einem Schwenklager eines Stellarmes verstellbar ist. Auf diese Weise ergeben sich unterschiedliche Hebelverhältnisse, sodass die auf den Stellarm ausgeübte Kraft der Gasdruckfeder einstellbar ist. Nachteilig daran ist, dass die Zugänglichkeit des Griffs durch das Vorhandensein des Möbelteiles behindert wird.

Aufgabe der vorliegenden Erfindung ist es, einen Möbelantrieb der eingangs erwähnten Gattung unter Vermeidung der oben diskutierten Nachteile anzugeben, wobei eine adaptive Anpassung der Kompensationskraft an verschiedene Gewichte und/oder an verschiedene Beladungszustände des bewegbaren Möbelteiles ermöglicht wird.

Dies wird erfindungsgemäß durch die Merkmale des Patentanspruchs 1 gelöst. Weitere vorteilhafte Ausführungen der Erfindung sind in den abhängigen Unteransprüchen angegeben.

Gemäß der Erfindung ist also vorgesehen, dass die Kompensationsvorrichtung einen am bewegbaren Möbelteil zu befestigenden und durch eine Person zu betätigenden Griff aufweist, wobei das zumindest eine Stellglied durch eine Betätigung des Griffs relativ zum Druckstück bewegbar ist, wodurch die Kraft der Federvorrichtung auf den wenigstens einen Stellarm veränderbar ist, sodass bei einer Vergrößerung des Gewichtes des bewegbaren Möbelteiles die Kompensationskraft erhöht und bei einer Verkleinerung des Gewichtes des bewegbaren Möbelteiles die Kompensationskraft verringert wird.

Mit anderen Worten ist ein am bewegbaren Möbelteil anordenbarer Griff vorgesehen, welcher im Montagezustand relativ zum bewegbaren Möbelteil begrenzt verschwenkbar oder begrenzt verschiebbar gelagert ist. Der Griff steht dabei mit wenigstens einem Stellglied des Übertragungsmechanismus in Wirkverbindung, sodass sich bei einer Betätigung des Griffs in zumindest einer Bewegungsrichtung auch das Stellglied mitbewegt und dadurch die auf den wenigstens einen Stellarm ausgeübte Kompensationskraft der Federvorrichtung veränderbar ist. Somit kann durch eine manuelle Betätigung des Griffs eine der Gewichtskraft des bewegbaren Möbelteiles entgegengesetzte Kompensationskraft so eingestellt werden, dass die Kompensationskraft der Gewichtskraft des bewegbaren Möbelteiles entspricht, d.h. dass das bewegbare Möbelteil in einer Offenstellung durch die von der Federvorrichtung bereitgestellte Kompensationskraft austariert gehalten und damit für eine Person leicht zu bedienen ist.

Das Stellglied kann entweder einteilig, allerdings auch zwei- oder mehrteilig ausgeführt sein.

Der vorgeschlagene Möbelantrieb ist insbesondere für Möbelteile geeignet, welche einen Stauraum zur Aufnahme von Staugut aufweisen und welche relativ zu einem Möbelkorpus zwischen einer angehobenen Schließstellung und einer abgesenkten Offenstellung bewegbar gelagert sind. Durch die Beladung mit Staugut bzw. durch die Entnahme von Staugut ist auch die Gewichtskraft des bewegbaren Möbelteiles dynamischen Veränderungen unterworfen, wobei diese unterschiedliche Gewichtskraft durch eine manuelle Betätigung des Griffs kompensierbar ist.

Es ist allerdings nicht zwingend notwendig, dass das Möbelteil einen Stauraum zur Aufnahme von Staugut aufweisen muss, der Möbelantrieb ist auch für bewegbare Möbelteile in Form von Möbelklappen einsetzbar, welche relativ zu einem Möbelkorpus hochbewegbar gelagert sind. Die Einstellung der Kompensationskraft durch eine Betätigung des Griffs ist auch bei solchen Möbelklappen sinnvoll, beispielsweise dann, wenn eine aus einem Holzmaterial oder eine aus einer Leichtbauplatte bestehende Möbelklappe zu einem späteren Zeitpunkt durch eine Möbelklappe aus einem schwereren Material (beispielsweise Glas) ersetzt wird. Somit ist ein und derselbe Möbelantrieb auch für Möbelklappen mit unterschiedlichem Gewicht, unterschiedlicher Größe und/oder unterschiedlichem Material gleichermaßen verwendbar. Auch kann es vorkommen, dass die Mechanik des Möbelantriebes mit den Jahren durch erhöhte Reibung schwergängiger funktioniert. Auch dieses Problem kann durch den Möbelantrieb behoben werden, weil die Kompensationskraft bei jeder Bewegung des Möbelteiles durch eine Betätigung des Griffs neu eingestellt wird.

Die Einstellung der Kompensationskraft kann beispielsweise so ablaufen, dass in einem ersten Schritt das bewegbare Möbelteil in eine abgesenkte Stellung relativ zum Möbelkorpus bewegt wird, in einem nachfolgenden Schritt wird der Griff durch mechanische Kraftausübung - ohne dass sich dabei das Möbelteil bewegt - so lange betätigt, bis schließlich die Kompensationskraft der Gewichtskraft entspricht. Hat die Kompensationskraft der Federvorrichtung die Gewichtskraft des bewegbaren Möbelteiles überschritten, so wird das bewegbare Möbelteile durch die Kraft der Federvorrichtung ausgehend von der abgesenkten Stellung angehoben, woraufhin das austarierte Möbelteil durch manuelle Betätigung weiter anhebbar ist.

Der Möbelantrieb kann eine Verriegelungsvorrichtung zum Verriegeln einer Lage des zumindest einen Stellgliedes aufweisen, sodass das Stellglied nach erfolgter Vorpositionierung durch die Betätigung des Griffs in dieser voreingestellten Lage arretierbar ist. Das Stellglied kann durch die Verriegelungsvorrichtung dann arretiert werden, wenn die Kompensationskraft der Federvorrichtung im Wesentlichen gleich groß oder größer als die Gewichtskraft des bewegbaren Möbelteiles ist.

Weitere Einzelheiten und Vorteile der Erfindung ergeben sich aus der nachfolgenden Figurenbeschreibung. Dabei zeigt bzw. zeigen:
- Fig. 1: eine perspektivische Ansicht eines Möbel mit einem Möbelteil, welches durch einen Möbelantrieb relativ zu einem Möbelkorpus höhenbeweglich gelagert ist,
- Fig. 2: das Möbel gemäß Fig. 1 in einer Seitenansicht,
- Fig. 3: das Möbel in einer Seitenansicht, wobei durch eine Betätigung des Griffs die Kompensationskraft erhöht wird,
- Fig. 4: das Möbel in einer Seitenansicht, wobei das Stellglied nach erfolgter Vorpositionierung durch eine Verriegelungsvorrichtung arretiert ist,
- Fig. 5a, 5b: das Möbel mit dem bewegbaren Möbelteil in zwei unterschiedlichen Höhenstellungen,
- Fig. 6a, 6b: Seitenansichten des Möbels mit einem gering beladenen Möbelteil, wobei das Stellglied einerseits entriegelt und andererseits nach erfolgter Voreinstellung verriegelt ist,
- Fig. 7a, 7b: Seitenansichten des Möbels mit einem schwerer beladenen Möbelteil, wobei das Stellglied einerseits entriegelt und andererseits nach erfolgter Voreinstellung verriegelt ist,
- Fig. 8: der Möbelantrieb in einer Explosionsdarstellung.

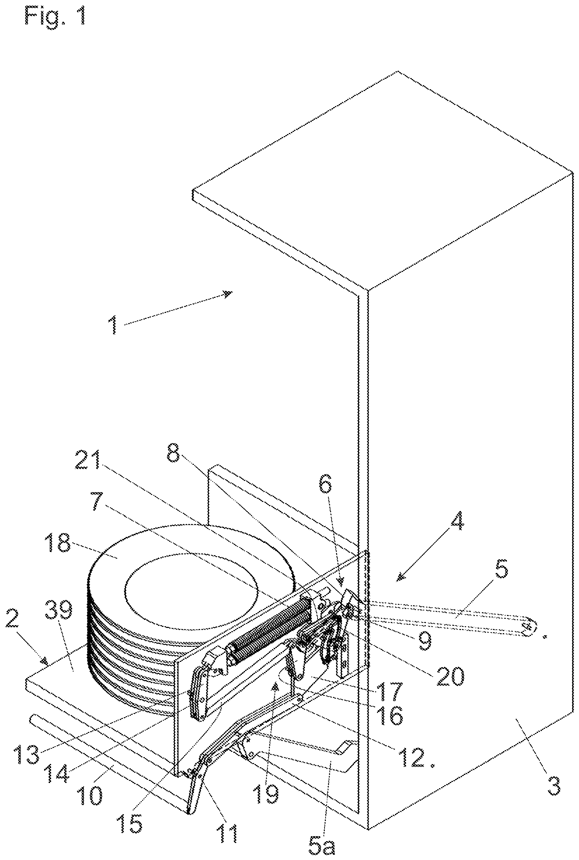

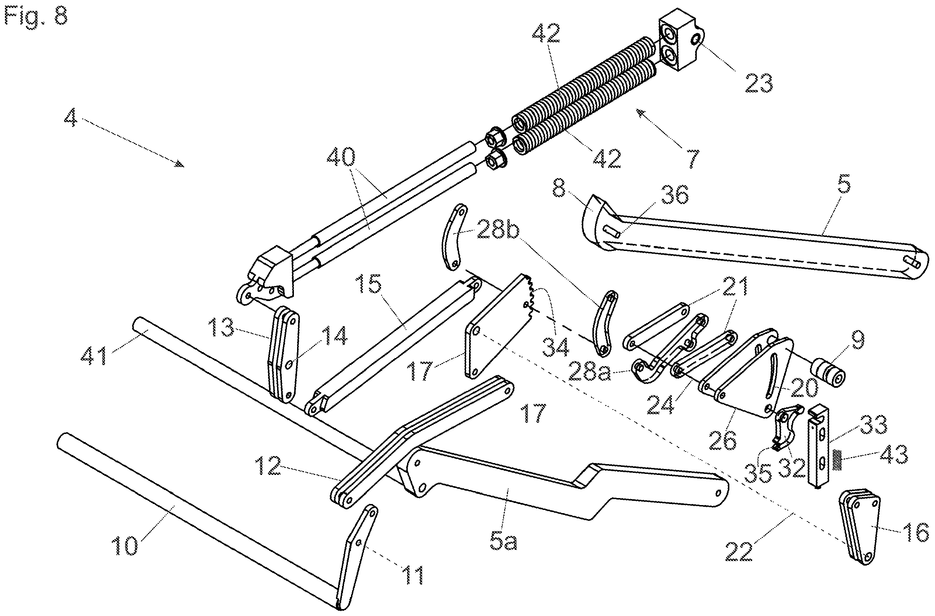

Fig. 1 zeigt ein Möbel 1 mit einem bewegbaren Möbelteil 2, welches durch einen Möbelantrieb 4 zwischen einer angehobenen Schließstellung und einer abgesenkten Offenstellung relativ zu einem Möbelkorpus 3 bewegbar gelagert ist. Das Möbelteil 2 kann zumindest einen Stauraum 39 zur Aufnahme von Staugut 18 aufweisen, welches durch den dargestellten Tellerstapel symbolisiert wird. Der Möbelantrieb 4 umfasst wenigstens einen schwenkbaren Stellarm 5, welcher einerseits am Möbelkorpus 3 und andererseits am bewegbaren Möbelteil 2 zu befestigen ist. Im gezeigten Ausführungsbeispiel ist auch ein zweiter Stellarm 5a zum Bewegen des Möbelteiles 2 vorhanden, welcher mit einem ersten Endbereich am Möbelkorpus 3 und mit einem zweiten Endbereich am bewegbaren Möbelteil 2 angelenkt ist. Durch eine Kompensationsvorrichtung 6 wird auf den wenigstens einen Stellarm 5 eine einer Gewichtskraft des, gegebenenfalls beladenen, Möbelteiles 2 entgegengesetzte Kompensationskraft ausgeübt, wobei die Kompensationsvorrichtung 6 eine Federvorrichtung 7 zur Kraftbeaufschlagung des Stellarmes 5 aufweist. Die Federvorrichtung 7 kann eine oder mehrere Schraubenfedern umfassen, welche hier als Druckfedern 42 (Fig. 8) ausgebildet sind. Alternativ kann die Federvorrichtung 7 zumindest eine oder mehrere Zugfedern oder auch einen Gasdruckspeicher umfassen.

Zum Übertragen einer Kraft von der Federvorrichtung 7 auf den Stellarm 5 ist ein Übertragungsmechanismus 19 vorgesehen, welcher im gezeigten Ausführungsbeispiel einen um eine Achse 14 schwenkbaren Umlenkhebel 13, einen mit dem Umlenkhebel 13 gelenkig verbundenen Kraftübertragungshebel 15, ein mit dem Kraftübertragungshebel 15 gelenkig verbundenes Zwischenstück 16, ein bewegbar gelagertes Stellglied 21, eine Stellkontur 8 und ein von der Federvorrichtung 7 belastetes Druckstück 9 aufweist, wobei das Druckstück 9 bei einer Bewegung des Stellarmes 5 entlang der Stellkontur 8 verfahrbar ist, welche beispielsweise am Stellarm 5 angeordnet oder ausgebildet sein kann. Das Druckstück 9 und die Stellkontur 8 können aber auch an einer anderen Position im wirkenden Kraftstrang zwischen der Federvorrichtung 7 und dem Stellarm 5 angeordnet werden, beispielsweise derart, dass das Druckstück 9 am Stellarm 5 gelagert und/oder dass die Stellkontur 8 an einem von der Federvorrichtung 7 belasteten Zwischenhebel angeordnet oder ausgebildet ist. Das Druckstück 9 kann als eine um eine Achse drehbare Druckrolle ausgebildet sein, welche entlang der Stellkontur 8 abrollbar ist.

Die Kompensationsvorrichtung 6 umfasst einen am bewegbaren Möbelteil 2 zu befestigenden und durch eine Person zu betätigenden Griff 10, welcher um eine, beispielsweise im Montagezustand horizontal verlaufende, Achse 11 schwenkbar gelagert ist. Durch eine manuelle Kraftausübung auf den Griff 10 ist der relative Abstand zwischen dem Stellglied 21 und dem Druckstück 9 veränderbar, wodurch auch die Kraft der Federvorrichtung 7 auf den Stellarm 5 veränderbar ist, sodass bei einer Vergrößerung des Gewichtes des bewegbaren Möbelteiles 2 (beispielsweise durch zusätzliche Beladung mit Staugut 18) die Kompensationskraft der Federvorrichtung 7 erhöht und bei einer Verkleinerung des Gewichtes (beispielsweise durch Entnahme von Staugut 18) des bewegbaren Möbelteiles 2 die Kompensationskraft entsprechend verringert wird.

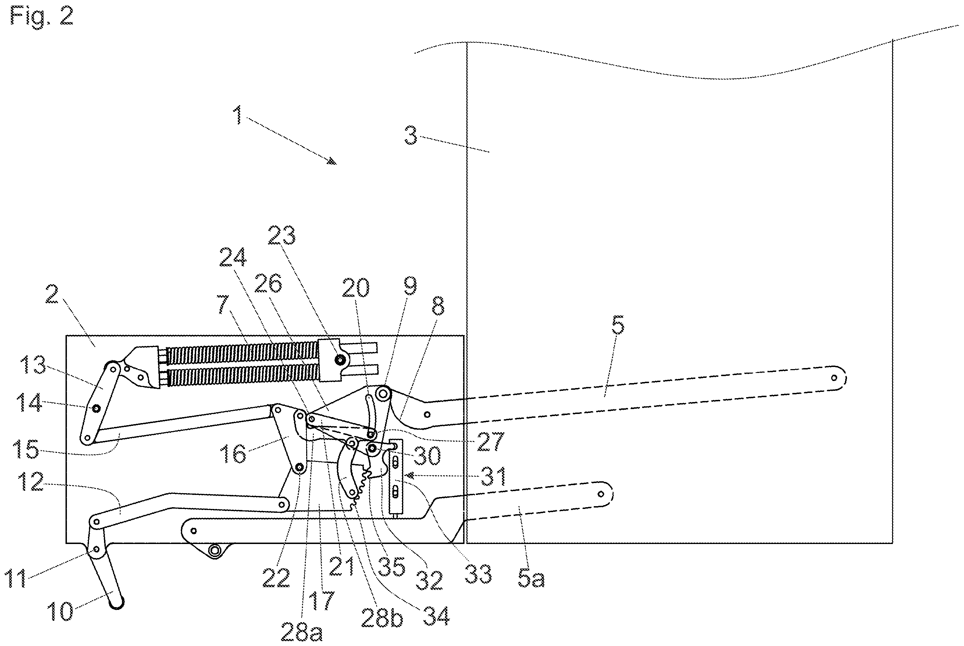

Fig. 2 zeigt eine Seitenansicht des Möbels 1, wobei lediglich der untere Teil des Möbelkorpus 3 gezeigt ist und wobei sich das bewegbare Möbelteil 2 in einer vollständig abgesenkten Lage relativ zum Möbelkorpus 3 befindet. Zum Bewegen des Möbelteiles 2 sind zwei Stellarme 5, 5a vorgesehen, welche jeweils einerseits am Möbelkorpus 3 und andererseits am bewegbaren Möbelteil 2 befestigt sind. Die Druckfedern 42 der Federvorrichtung 7 stützen sich an einer ortsfesten Federbasis 23 ab und drücken gegen ein erstes Hebelende des Umlenkhebels 13, welcher um eine ortsfeste Achse 14 schwenkbar gelagert ist. Das zweite Hebelende des Umlenkhebels 13 ist mit dem Kraftübertragungshebel 15 gelenkig verbunden, welcher mit dem Zwischenstück 16 schwenkbar in Verbindung steht. Das Zwischenstück 16 ist mit einem ersten, vorzugsweise gekrümmten, Hebel 28a und über eine ortsfeste Achse 22 mit einem Rasthebel 17 verbunden. Ein zweiter Hebel 28b ist sowohl mit dem ersten Hebel 28a als auch mit dem Rasthebel 17 gelenkig gekoppelt, wobei der Rasthebel 17 über einen Schubhebel 12 mit dem um die Achse 11 schwenkbaren Griff 10 in Wirkverbindung steht. An einem um eine ortsfeste Achse 24 schwenkbaren Einstellhebel 26 ist das Druckstück 9 in Form der drehbaren Druckrolle gelagert, wobei ein bewegliches Stellglied 21 in Form eines Hebels um die ortsfeste Achse 24 schwenkbar gelagert ist und welches durch eine Bewegung des Griffs 10 um die Achse 11, beispielsweise über einen Bolzen 27, relativ zu einer am Einstellhebel 26 angeordneten oder ausgebildeten Führung 20 bewegbar gelagert ist. Zum Verriegeln des Stellgliedes 21 ist eine Verriegelungsvorrichtung 31 vorgesehen, welche ein begrenzt höhenbewegliches Schaltelement 33 und ein durch das Schaltelement 33 bewegbares Rastelement 32 umfasst. Das Rastelement 32 ist über die Achse 30 mit dem Einstellhebel 26 schwenkbar verbunden, das Schaltelement 33 ist durch einen Kraftspeicher 43 (Fig. 8) in vertikaler Richtung nach unten vorgespannt und ist in der gezeigten Figur am zweiten Stellarm 5a abstützbar, wodurch das Rastelement 32 vom Rasthebel 17 außer Eingriff ist. Der Rasthebel 17 ist mit einer Verzahnung 34 versehen, welche in der verriegelten Stellung mit einer Gegenverzahnung 35 des Rastelementes 32 zusammenwirkt. Alternativ ist es möglich, dass der Rasthebel 17 (und damit das Stellglied 21) nach erfolgter Vorpositionierung kraftschlüssig, d.h. durch Klemmung, fixiert werden kann. In Fig. 2 ist die Kompensationskraft der Federvorrichtung 7 minimal eingestellt, sodass das bewegbare Möbelteil 2 durch eine Entnahme von Staugut 18 nicht unkontrolliert nach oben schnellt. Überdies befindet sich das Stellglied 21 in einer unteren bzw. abgesenkten Endlage des bewegbaren Möbelteiles 2 in einer entriegelten Stellung, sodass das Stellglied 21 in dieser Endlage durch eine mechanische Kraftausübung auf den Griff 10 relativ zum Druckstück 9, vorzugsweise stufenlos, voreinstellbar ist.

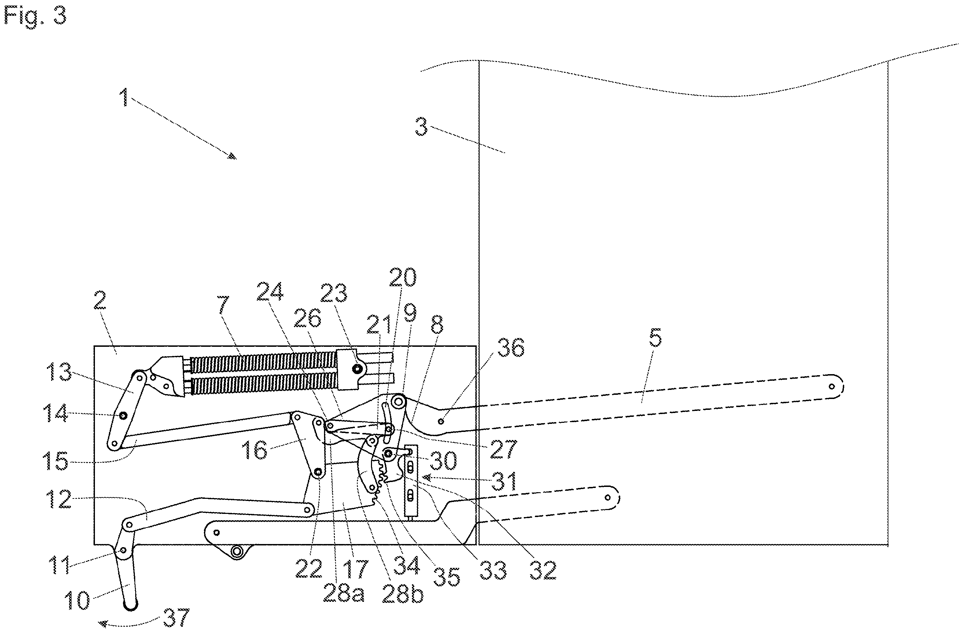

Fig. 3 zeigt das Möbel 1 gemäß Fig. 2, wobei die Lage des Stellgliedes 21 relativ zum Druckstück 9 durch eine manuelle Betätigung des Griffs 10 um die Achse 11 in Richtung des Pfeils 37 veränderbar und damit auch die Kompensationskraft der Federvorrichtung 7 voreingestellt werden kann. Durch eine Betätigung des Griffs 10 in Richtung des Pfeils 37 wird über den Schubhebel 12 auch der Rasthebel 17 um die ortsfeste Drehachse 22 im Gegenuhrzeigersinn verkippt, wodurch sich auch die beiden Hebel 28a, 28b und damit der Bolzen 27 des Stellgliedes 21 entlang der Führung 20 nach oben bewegen und so näher in Richtung des Druckstücks 9 positionierbar sind. Dabei wird auch das Zwischenstück 16 um die ortsfeste Drehachse 22 im Gegenuhrzeigersinn verschwenkt, wodurch die Federvorrichtung 7 über den Kraftübertragungshebel 15 und über den Umlenkhebel 13 stärker komprimiert und damit die Kompensationskraft erhöht wird. Das Rastelement 32 bleibt vom Rasthebel 17 so lange außer Eingriff, bis die Kompensationskraft der Federvorrichtung 7 der Gewichtskraft des bewegbaren Möbelteiles 2 entspricht.

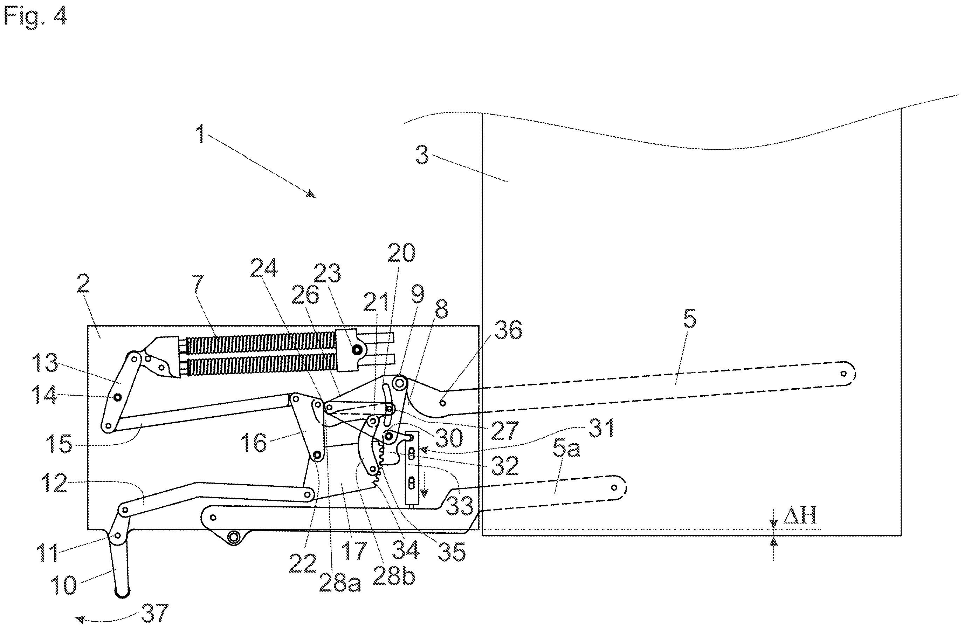

Fig. 4 zeigt das Möbel 1 gemäß Fig. 3, wobei der Griff 10 weiter in Richtung des Pfeils 37 bewegt wurde, wodurch sich auch der Bolzen 27 des Stellgliedes 21 weiter entlang der Führung 20 des Einstellhebels 26 bewegt und dadurch der Abstand zwischen dem Druckstück 9 und dem Stellglied 21 verringert wurde. Durch die Verringerung des relativen Abstandes zwischen dem Druckstück 9 und dem Stellglied 21 wird auch die Federvorrichtung 7 gespannt, sodass die Kompensationskraft erhöht wird. Wenn die Kompensationskraft der Federvorrichtung 7 schließlich die Gewichtskraft des bewegbaren Möbelteiles 2 überschreitet, so wird das bewegbare Möbelteil 2 durch die Kraft der Federvorrichtung 7 relativ zum Möbelkorpus 3 um die Differenzhöhe ΔH geringfügig angehoben. Durch diese Anhebebewegung des Möbelteiles 2 wird auch das Schaltelement 33 vom zweiten Stellarm 5a abgehoben, wobei sich das Schaltelement 33 durch die Kraft des sich entladenden Kraftspeichers 43 in Richtung des eingezeichneten Pfeils 38 vertikal nach unten bewegt. Durch die Bewegung des Schaltelementes 33 in Richtung des Pfeils 38 nach unten wird auch das Rastelement 32 um die Achse 30 verschwenkt, sodass der Rasthebel 17 (und damit das Stellglied 21) durch das Rastelement 32 verriegelbar ist. Das Schaltelement 33 ist also zwischen einer ersten Stellung und einer zweiten Stellung beweglich gelagert (beispielsweise über die gezeigten Langlöcher des Schaltelementes 33), wobei das Stellglied 21 in der ersten Stellung des Schaltelementes 33 vom Rastelement 32 entriegelbar ist und dass das Stellglied 21 in der zweiten Stellung des Schaltelementes 33 durch die Kraft des Kraftspeichers 43 selbsttätig mit dem Rastelement 32 verriegelbar ist.

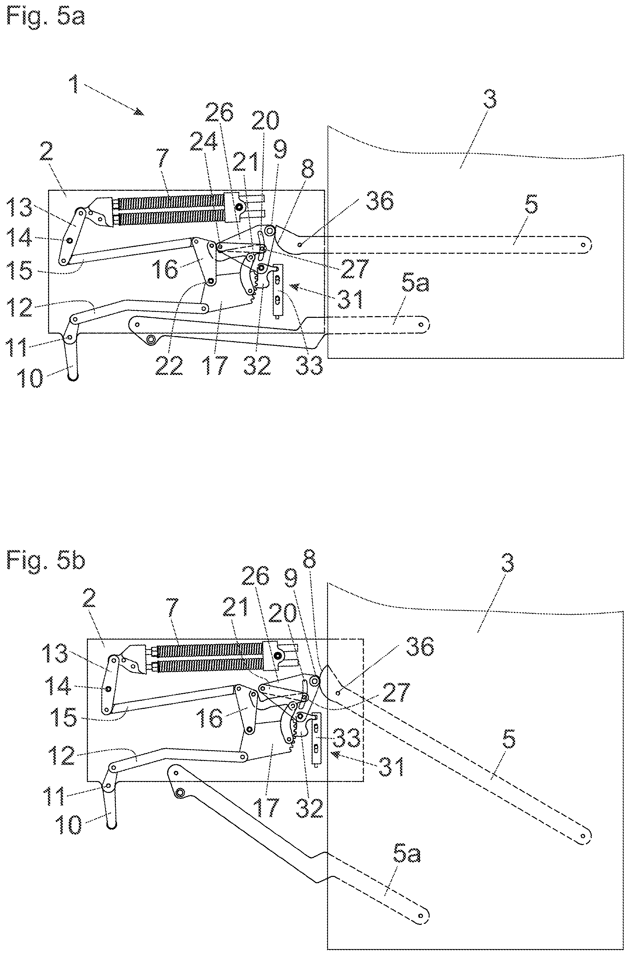

Fig. 5a zeigt das Möbel 1 gemäß Fig. 4 mit einer fortgesetzten Aufwärtsbewegung des Möbelteiles 2 relativ zum Möbelkorpus 3. Das Stellglied 21 bleibt durch die Verriegelungsvorrichtung 31 in seiner voreingestellten Lage relativ zum Druckstück 9 verriegelt. Das als Druckrolle ausgebildete Druckstück 9 ist durch eine Bewegung der Stellarme 5, 5a entlang einer konvex ausgebildeten Stellkontur 8 verfahrbar, welche im gezeigten Ausführungsbeispiel an dem um die Drehachse 36 schwenkbaren Stellarm 5 angeordnet oder ausgebildet ist. Fig. 5b zeigt das Möbel 1 mit dem bewegbaren Möbelteil 2 in einer weiter angehobenen Stellung. Das bewegbare Möbelteil 2 kann ausgehend von Fig. 5a so lange bewegt werden, bis das Möbelteil 2 in einer weiter angehobenen Stellung vollständig im Möbelkorpus 3 aufgenommen ist. Das bewegbare Möbelteil 2 kann durch den Möbelantrieb 4 relativ zum Möbelkorpus 3 schwenkbar und/oder linear bewegbar gelagert sein.

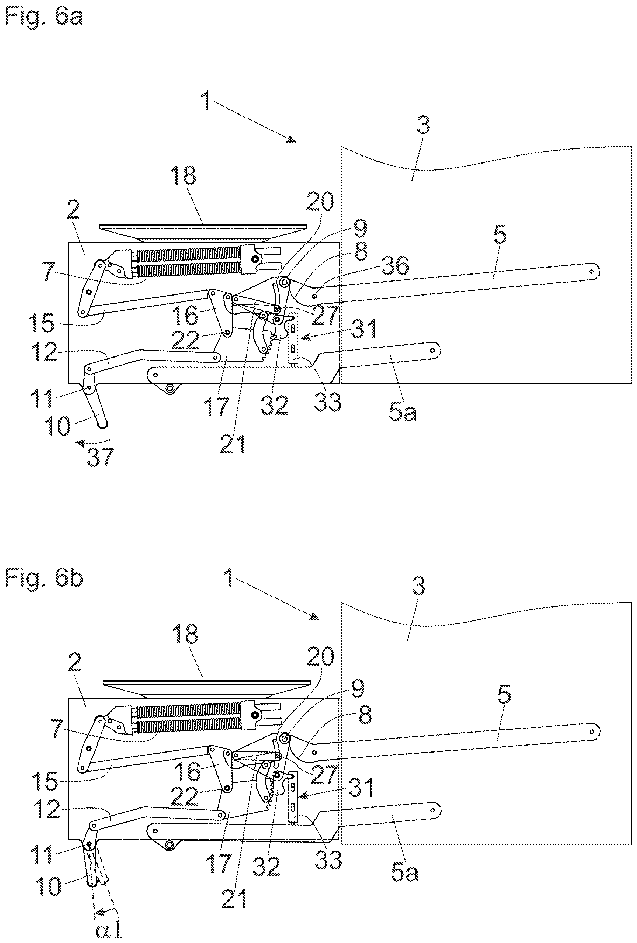

Fig. 6a zeigt das Möbel 1, wobei das bewegbare Möbelteil 2 durch Staugut 18 nur gering beladen ist, d.h. es befindet sich nur ein einziger Teller auf dem bewegbaren Möbelteil 2. In der unteren Endlage des bewegbaren Möbelteiles 2 ist das Stellglied 21 von der Verriegelungsvorrichtung 31 entriegelt und der Bolzen 27 des Stellgliedes 21 befindet sich relativ zum Druckstück 9 in einer entfernten Position, sodass die Federvorrichtung 7 auf den Stellarm 5 nur ein geringes Drehmoment ausübt. Durch eine Betätigung des Griffs 10 in Richtung des Pfeils 37 wird der Rasthebel 17 um die ortsfeste Achse 22 verschwenkt, wodurch auch der Bolzen 27 des Stellgliedes 21 entlang der Führung 20 bewegt und auch die Federvorrichtung 7 entsprechend dem Gewicht des leichteren Staugutes 18 gespannt wird. Wenn die Kompensationskraft der Federvorrichtung 7 die Gewichtskraft des bewegbaren Möbelteiles 2 überschreitet, so wird das bewegbare Möbelteil 2 durch die Kraft der Federvorrichtung 7 angehoben. Durch diese Anhebebewegung wird auch das Schaltelement 33 vom zweiten Stellarm 5a außer Eingriff gebracht, woraufhin das Schaltelement 33 durch die Kraft des Kraftspeichers 43 vertikal nach unten gedrückt und dadurch das Rastelement 32 mit dem Rasthebel 17 in der voreingestellten Position des Stellgliedes 7 verriegelt wird (Fig. 6b). Bei einer geringen Gewichtskraft des bewegbaren Möbelteiles 2 wurde der Griff 10 in Richtung des Pfeils 37 innerhalb eines Winkelbereiches a1 von etwa 20° verschwenkt.

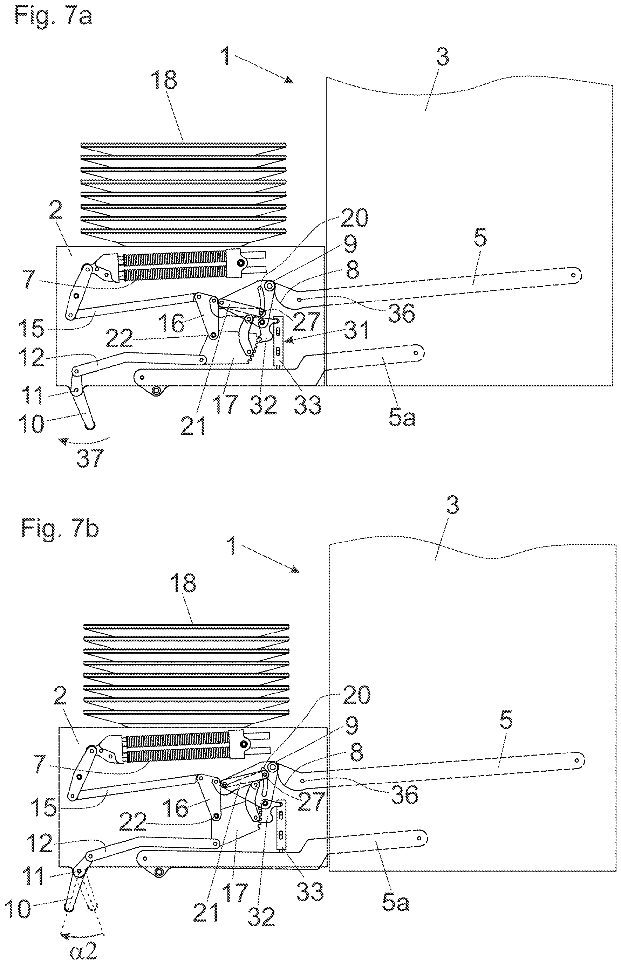

Fig. 6a und Fig. 6b zeigen das Möbel 1, wobei das bewegbare Möbelteil 2 durch Staugut 18 schwerer beladen ist, d.h. es befinden sich hier mehrere Teller auf dem bewegbaren Möbelteil 2. Hier muss der Griff 10 innerhalb eines Winkelbereiches von etwa 40° bewegt werden, bis die Kompensationskraft korrekt eingestellt ist und eine selbsttätige Verriegelung des Stellgliedes 21 durch die Verriegelungsvorrichtung 31 herbeigeführt wird (Fig. 6b). Aus einem direkten Vergleich der Fig. 7b mit der Fig. 6b wird deutlich, dass der Abstand zwischen dem Druckstück 9 (Drehachse der Druckrolle) und dem Bolzen 27 des Stellgliedes 21 in Fig. 7b (also bei Vorliegen einer größeren Gewichtskraft des bewegbaren Möbelteiles 2) geringer als in Fig. 6b (mit einer geringeren Gewichtskraft des bewegbaren Möbelteiles 2) ist. In diesem Ausführungsbeispiel ist somit die auf den ersten Stellarm 5 ausgeübte Kompensationskraft der Federvorrichtung 7 umso höher, je geringer der Relativabstand zwischen dem Druckstück 9 und dem Stellglied 21 ist.

Fig. 8 zeigt den Möbelantrieb 4 in einer Explosionsdarstellung. Die Federvorrichtung 7 umfasst zwei Stangen 40, welche durch die beiden Druckfedern 42 zum Verhindern eines Ausknickens der Druckfedern 42 hindurchgeführt sind. Der um die Achse 11 schwenkbare Griff 10 ist mit dem Schubhebel 12 verbunden, durch welchen der Rasthebel 17 um die feststehende Drehachse 22 bewegbar ist. Eine konvexe Stellkontur 8 ist am ersten Stellarm 5 ausgebildet, wobei das Druckstück 9 in Form der drehbaren Druckrolle entlang der Stellkontur 8 abrollbar ist. Der zweite Stellarm 5a weist ein Verbindungsstück 41 auf, durch welches eine Schwenkbewegung des zweiten Stellarmes 5a mit einer Schwenkbewegung eines an der gegenüberliegenden Seite des bewegbaren Möbelteiles 2 anordenbaren zweiten Stellarmes synchronisierbar ist. Zu erkennen ist auch der Kraftspeicher 43, durch welchen das Schaltelement 33 im Montagezustand senkrecht nach unten vorgespannt ist.

## Patentansprüche

1. Möbelantrieb (4) für ein relativ zu einem Möbelkorpus (3) bewegbar gelagertes Möbelteil (2), umfassend:
- wenigstens einen schwenkbar gelagerten Stellarm (5) zum Bewegen des bewegbaren Möbelteiles (2),
- eine Kompensationsvorrichtung (6), welche auf den wenigstens einen Stellarm (5) eine einer Gewichtskraft des gegebenenfalls beladenen Möbelteiles (2) entgegengesetzte Kompensationskraft ausübt, wobei die Kompensationsvorrichtung (6) eine Federvorrichtung (7) zur Kraftbeaufschlagung des wenigstens einen Stellarmes (5) aufweist,
- einen Übertragungsmechanismus (19) zum Übertragen einer Kraft der Federvorrichtung (7) auf den wenigstens einen Stellarm (5), wobei der Übertragungsmechanismus (19) zumindest ein bewegbar gelagertes Stellglied (21), eine Stellkontur (8) und ein von der Federvorrichtung (7) belastetes Druckstück (9) aufweist, wobei das Druckstück (9) bei einer Bewegung des wenigstens einen Stellarmes (5) entlang der Stellkontur (8) verfahrbar ist,
- wobei die Kompensationsvorrichtung (6) einen am bewegbaren Möbelteil (2) zu befestigenden und durch eine Person zu betätigenden Griff (10) aufweist, wobei das zumindest eine Stellglied (21) durch eine Betätigung des Griffs (10) relativ zum Druckstück (9) bewegbar ist, wodurch die Kraft der Federvorrichtung (7) auf den wenigstens einen Stellarm (5) veränderbar ist, sodass bei einer Vergrößerung des Gewichtes des bewegbaren Möbelteiles (2) die Kompensationskraft erhöht und bei einer Verkleinerung des Gewichtes des bewegbaren Möbelteiles (2) die Kompensationskraft verringert wird,
**dadurch gekennzeichnet, dass** der Möbelantrieb (4) eine Verriegelungsvorrichtung (31) zum Verriegeln einer Lage des Stellgliedes (21) aufweist, wobei die Verriegelungsvorrichtung (31) ein zwischen einer ersten Stellung und einer zweiten Stellung beweglich gelagertes Schaltelement (33) und ein durch das Schaltelement (33) bewegbares Rastelement (32) zum Verriegeln des Stellgliedes (21) aufweist, wobei das Stellglied (21) in der ersten Stellung des Schaltelementes (33) entriegelbar ist und dass das Stellglied (21) in der zweiten Stellung des Schaltelementes (33) durch die Kraft eines Kraftspeichers (43) selbsttätig mit dem Rastelement (32) verriegelbar ist.

2. Möbelantrieb nach Anspruch 1, **dadurch gekennzeichnet, dass** das Stellglied (21) durch eine Betätigung des Griffs (10) in oder entlang einer Führung (20) relativ zum Druckstück (9) bewegbar ist.

3. Möbelantrieb nach Anspruch 2, **dadurch gekennzeichnet, dass** der Übertragungsmechanismus (19) zumindest einen um eine Achse (24) schwenkbaren Einstellhebel (26) aufweist, wobei die Führung (20) an diesem Einstellhebel (26) angeordnet oder ausgebildet ist.

4. Möbelantrieb nach Anspruch 3, **dadurch gekennzeichnet, dass** das Druckstück (9) am Einstellhebel (26) gelagert ist.

5. Möbelantrieb nach einem der Ansprüche 1 bis 4, **dadurch gekennzeichnet, dass** das zumindest eine Stellglied (21) durch die Verriegelungsvorrichtung (31) in einer Lage verriegelbar ist, in welcher die Kompensationskraft der Federvorrichtung (7) im Wesentlichen gleich groß oder größer als die Gewichtskraft des bewegbaren Möbelteiles (2) ist.

6. Möbelantrieb nach einem der Ansprüche 1 bis 5, **dadurch gekennzeichnet, dass** der Möbelantrieb (4) einen zweiten Stellarm (5a) zum Bewegen des bewegbaren Möbelteiles (2) aufweist, wobei das Schaltelement (33) in der ersten Stellung am zweiten Stellarm (5a) abstützbar ist und dass das Schaltelement (33) in der zweiten Stellung vom zweiten Stellarm (5a) außer Eingriff ist.

7. Möbelantrieb nach einem der Ansprüche 1 bis 6, **dadurch gekennzeichnet, dass** die Verriegelungsvorrichtung (31) einen durch die Betätigung des Griffs (10) bewegbaren Rasthebel (17) mit einer Verzahnung (34) aufweist, wobei die Verzahnung (34) des Rasthebels (17) in der zweiten Stellung des Schaltelementes (33) mit einer Gegenverzahnung (35) des Rastelementes (32) in Eingriff steht.

8. Möbelantrieb nach Anspruch 7, **dadurch gekennzeichnet, dass** der Griff (10) über zumindest einen Schubhebel (12) gelenkig mit dem Rasthebel (17) verbunden ist.

9. Möbelantrieb nach Anspruch 7 oder 8, **dadurch gekennzeichnet, dass** der Rasthebel (17) über wenigstens einen Kraftübertragungshebel (15) mit der Federvorrichtung (7) verbunden ist.

10. Möbelantrieb nach einem der Ansprüche 1 bis 9, **dadurch gekennzeichnet, dass** das Druckstück (9) als eine um eine Achse drehbar gelagerte Druckrolle ausgebildet ist.

11. Möbelantrieb nach einem der Ansprüche 1 bis 10, **dadurch gekennzeichnet, dass** der Griff (10) im Montagezustand am bewegbar gelagerten Möbelteil (2) relativ zum bewegbar gelagerten Möbelteil (2) begrenzt bewegbar gelagert ist.

12. Möbel (1) mit wenigstens einem Möbelantrieb (4) nach einem der Ansprüche 1 bis 11.

13. Möbel nach Anspruch 12, **dadurch gekennzeichnet, dass** das Möbel (4) einen Möbelkorpus (3) und zumindest ein relativ zum Möbelkorpus (3) bewegbar gelagertes Möbelteil (2) aufweist, wobei das bewegbare Möbelteil (2) durch den Möbelantrieb (4) zwischen einer angehobenen Stellung und abgesenkten Stellung relativ zum Möbelkorpus (3) bewegbar gelagert ist.

14. Möbel nach Anspruch 12 oder 13, **dadurch gekennzeichnet, dass** das bewegbare Möbelteil (2) zumindest einen Stauraum (39) zur Aufnahme von Staugut (18) aufweist.

## Claims

1. A furniture drive (4) for a furniture part (2) movably-supported relative to a furniture carcass (3), comprising:
- at least one pivotally mounted actuating arm (5) for moving the movable furniture part (2),
- a compensating device (6) for applying a compensation force to the at least one actuating arm (5) in a direction opposite to a weight force of the, possibly loaded, furniture part (2), the compensating device (6) including a spring device (7) for applying a force to the at least one actuating arm (5),
- a transmission mechanism (19) for transmitting a force from the spring device (7) to the at least one actuating arm (5), the transmission mechanism (19) including at least one movably-supported actuating portion (21), a setting contour (8) and a pressure portion (9) pressurized by the spring device (7), the pressure portion (9) being configured to run along the setting contour (8) upon a movement of the at least one actuating arm (5),
- wherein the compensating device (6) includes a handle (10) to be fixed to the movable furniture part (2) and configured to be actuated by a person, the at least one actuating portion (21) being configured to be moved relative to the pressure portion (9) by an actuation of the handle (10), whereby the force of the spring device (7) applied to the at least one actuating arm (5) can be varied, so that the compensation force is increased upon an increase of the weight of the movable furniture part (2), and the compensation force is reduced upon a decrease of the weight of the movable furniture part (2),
**characterized in that in that** the furniture drive (4) includes a locking device (31) for locking a position of the actuating portion (21), the locking device (31) including a switch element (33) movably-supported between a first position and a second position, and a locking element (32) configured to be moved by the switch element (33), wherein in the first position of the switch element (33), the actuating portion (21) can be unlocked, and, in the second position of the switch element (33), the actuating portion (21) can be automatically locked to the locking element (32) by a force of an energy storage member (43).

2. The furniture drive according to claim 1, **characterized in that** the actuating portion (21) is configured to be moved relative to the pressure portion (9) in or along a guide (20) by an actuation of the handle (10).

3. The furniture drive according to claim 2, **characterized in that** the transmission mechanism (19) includes at least one adjusting lever (26) pivotable about an axis (24), the guide (20) being arranged or formed on that adjusting lever (26).

4. The furniture drive according to claim 3, **characterized in that** the pressure portion (9) is supported on the adjusting lever (26).

5. The furniture drive according to one of the claims 1 to 4, **characterized in that** the at least one actuating portion (21) can be locked by the locking device (31) in a position in which the compensating force of the spring device (7) is substantially as large or larger than a weight force of the movable furniture part (2).

6. The furniture drive according to one of the claims 1 to 5, **characterized in that** the furniture drive (4) includes a second actuating arm (5a) for moving the movable furniture part (2), wherein the switch element (33), in the first position, can be supported on the second actuating arm (5a) and that the switch element (33), in the second position, is disengaged from the second actuating arm (5a).

7. The furniture drive according to one of the claims 1 to 6, **characterized in that** the locking device (31) includes a locking lever (17) configured to be moved by an actuation of the handle (10), the locking lever (17) having a tooth arrangement (34), the tooth arrangement (34) of the locking lever (17), in the second position of the switch element (33), being engaged with a counter-tooth arrangement (35) of the locking element (32).

8. The furniture drive according to claim 7, **characterized in that** the handle (10) is hingedly connected to the locking lever (17) by at least one thrust lever (12).

9. The furniture drive according to claim 7 or 8, **characterized in that** the locking lever (17) is connected to the spring device (7) by at least one force transmission lever (15).

10. The furniture drive according to one of the claims 1 to 9, **characterized in that** the pressure portion (9) is configured as a pressure roller rotatable about an axis.

11. The furniture drive according to one of the claims 1 to 10, **characterized in that** the handle (10), in the mounted condition on the movable furniture part (2), is configured to be moved relative to the movable furniture part (2) in a limited manner.

12. An item of furniture (1) comprising at least one furniture drive (4) according to one of the claims 1 to 11.

13. The item of furniture (1) according to claim 12, **characterized in that** the item of furniture (1) includes a furniture carcass (3) and at least one furniture part (2) movably-supported relative to the furniture carcass (3), wherein the movable furniture part (2) can be moved by the furniture drive (4) between an elevated position and a lowered position relative to the furniture carcass (3).

14. The item of furniture (1) according to claim 12 or 13, **characterized in that** the movable furniture part (2) includes at least one storage space (39) for receiving storage items (18).

## Revendications

1. Commande de meuble (4) pour une pièce de meuble (2) montée de façon déplaçable par rapport à un corps de meuble (3), comprenant:
- au moins un bras d'actionnement (5) monté de façon pivotante pour déplacer la pièce de meuble (2) déplaçable,
- un dispositif de compensation (6) qui exerce sur le au moins un bras d'actionnement (5) une force de compensation opposée à un poids de la pièce de meuble (2) éventuellement chargée, dans laquelle le dispositif de compensation (6) présente un dispositif de ressort (7) pour pressuriser par force le au moins un bras d'actionnement (5),
- un mécanisme de transmission (19) pour transmettre une force du dispositif de ressort (7) sur le au moins un bras d'actionnement (5), dans laquelle le mécanisme de transmission (19) présente au moins un organe d'actionnement (21) monté de façon déplaçable, un contour d'actionnement (8) et un élément de pression (9) sollicité par le dispositif de ressort (7), dans laquelle l'élément de pression (9) peut être déplacé par un déplacement du au moins un bras d'actionnement (5) le long du contour d'actionnement (8),
- dans laquelle le dispositif de compensation (6) présente une poignée (10) à fixer contre la pièce de meuble (2) déplaçable et à manœuvrer par une personne, dans laquelle le au moins un organe d'actionnement (21) est déplaçable par rapport à l'élément de pression (9) par une manoeuvre de la poignée (10), moyennant quoi la force du dispositif de ressort (7) sur le au moins un bras d'actionnement (5) peut être modifiée, de sorte que lors d'une augmentation du poids de la pièce de meuble (2) déplaçable la force de compensation soit accrue et lors d'une réduction du poids de la pièce de meuble (2) déplaçable la force de compensation soit décrue,
**caractérisée en ce que** la commande de meuble (4) présente un dispositif de verrouillage (31) pour verrouiller une position de l'organe d'actionnement (21), dans laquelle le dispositif de verrouillage (31) présente un élément de commutation (33) monté de façon déplaçable entre un premier positionnement et un second positionnement et un élément d'encliquetage (32) déplaçable par l'élément de commutation (33) pour verrouiller l'organe d'actionnement (21), dans laquelle l'organe d'actionnement (21) peut être déverrouillé dans le premier positionnement de l'élément d'encliquetage (33), et **en ce que** l'organe d'actionnement (21) peut être automatiquement verrouillé avec l'élément d'encliquetage (32) par la force d'un accumulateur de force (43) dans le second positionnement de l'élément d'encliquetage (33).

2. Commande de meuble selon la revendication 1, **caractérisée en ce que** l'organe d'actionnement (21) est déplaçable par une manoeuvre de la poignée (10) dans ou le long d'un guidage (20) par rapport à l'élément de pression (9).

3. Commande de meuble selon la revendication 2, **caractérisée en ce que** le mécanisme de transmission (19) présente au moins un levier de réglage (26) pivotant autour d'un axe (24), dans laquelle le guidage (20) est agencé ou conçu contre ce levier de réglage (26).

4. Commande de meuble selon la revendication 3, **caractérisée en ce que** l'élément de pression (9) est monté contre le levier de réglage (26).

5. Commande de meuble selon l'une des revendications 1 à 4, **caractérisée en ce que** le au moins un organe d'actionnement (21) peut être verrouillé par le dispositif de verrouillage (31) dans un positionnement dans lequel la force de compensation du dispositif de ressort (7) est essentiellement égale ou supérieure au poids de la pièce de meuble (2) déplaçable.

6. Commande de meuble selon l'une des revendications 1 à 5, **caractérisée en ce que** la commande de meuble (4) présente un second bras d'actionnement (5a) pour déplacer la pièce de meuble (2) déplaçable, dans laquelle l'élément de commutation (33) dans le premier positionnement peut être appuyé contre le second bras d'actionnement (5a), et **en ce que** l'élément de commutation (33) dans le second positionnement est hors de prise avec le second bras d'actionnement (5a).

7. Commande de meuble selon l'une des revendications 1 à 6, **caractérisée en ce que** le dispositif de verrouillage (31) présente un levier d'encliquetage (17) avec une denture (34) et déplaçable par une manœuvre de la poignée (10), dans laquelle la denture (34) du levier d'encliquetage (17) dans le second positionnement de l'élément de commutation (33) est en prise avec une contre-denture (35) de l'élément d'encliquetage (32).

8. Commande de meuble selon la revendication 7, **caractérisée en ce que** la poignée (10) est reliée de façon articulée au levier d'encliquetage (17) par au moins un levier à fournée (12).

9. Commande de meuble selon la revendication 7 ou 8, **caractérisée en ce que** le levier d'encliquetage (17) est relié au dispositif de ressort (7) par au moins un levier de transmission de force (15).

10. Commande de meuble selon l'une des revendications 1 à 9, **caractérisée en ce que** l'élément de pression (9) est conçu en tant que rouleau de pression monté en rotation autour d'un axe.

11. Commande de meuble selon l'une des revendications 1 à 10, **caractérisée en ce que** la poignée (10) à l'état de montage est montée contre la pièce de meuble (2) montée de façon déplaçable de sorte à pouvoir se déplacer de façon limitée par rapport à la pièce de meuble (2) montée de façon déplaçable.

12. Meuble (1) avec au moins une commande de meuble (4) selon l'une des revendications 1 à 11.

13. Meuble selon la revendication 12, **caractérisé en ce que** le meuble (4) présente un corps de meuble (3) et au moins une pièce de meuble (2) montée de façon déplaçable par rapport au corps de meuble (3), dans lequel la pièce de meuble (2) déplaçable est montée de façon déplaçable par la commande de meuble (4) entre un positionnement soulevé et un positionnement abaissé par rapport au corps de meuble (3).

14. Meuble selon la revendication 12 ou 13, **caractérisé en ce que** la pièce de meuble (2) déplaçable présente au moins un espace de rangement (39) pour recevoir un objet à ranger (18).
